(19)

**Europäisches Patentamt**

**European Patent Office**

**Office européen des brevets**

(11) **EP 4 492 091 A1**

(12) **EUROPÄISCHE PATENTANMELDUNG**

(43) Veröffentlichungstag:
**15.01.2025 Patentblatt 2025/03**

(21) Anmeldenummer: **24186465.1**

(22) Anmeldetag: **04.07.2024**

(51) Internationale Patentklassifikation (IPC):
**G01S 13/90** (2006.01) **G01S 7/40** (2006.01)

(52) Gemeinsame Patentklassifikation (CPC):
**G01S 7/4004; G01S 13/9058**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.07.2023 DE 102023118730**

(71) Anmelder: **Deutsches Zentrum für Luft- und Raumfahrt e.V.**
**53227 Bonn (DE)**

(72) Erfinder:
- **Rodrigues Silva Filho, Eduardo**
  **82205 Gilching (DE)**
- **Rodriguez-Cassola, Marc**
  **80798 München (DE)**
- **Prats-Iraola, Pau**
  **82205 Gilching (DE)**
- **Krieger, Gerhard**
  **82131 Gauting (DE)**
- **Moreira, Alberto**
  **82140 Olching (DE)**

(74) Vertreter: **Fink Numrich**
**Patentanwälte PartmbB**
**Paul-Gerhardt-Allee 24**
**81245 München (DE)**

(54) **VERFAHREN ZUR SCHÄTZUNG UND KORREKTUR DER ZEIT- UND PHASENREFERENZEN VON NICHT-SYNCHRONEN SAR-DATEN EINES MEHRKANALIGEN SAR-SYSTEMS**

(57) Die Erfindung beschreibt ein Verfahren zur Schätzung und Korrektur der Zeit- und Phasenreferenzen von nicht-synchronen SAR-Daten. Die nicht-synchronen SAR-Daten sind durch ein bistatisches oder ein multistatisches Mehrkanal-Radarsystem mit N Kanälen erfasst und bereitgestellt. In dem erfindungsgemäßen Verfahren wird basierend auf einer, insbesondere ausschließlichen, Auswertung von Informationen der SAR-Daten ein innerhalb der SAR-Daten vorliegender Residual-Taktphasenfehler ($\delta \hat{f}_{ij}[n_a]$) geschätzt und korrigiert. Das erfindungsgemäße Verfahren zeichnet sich dadurch aus, dass zur Schätzung des Residual-Taktphasenfehlers ($\delta \hat{f}_{ij}[n_a]$) differentielle Phasendaten zwischen einem oder mehreren Paaren von Kanälen ($CH_i$, $CH_j$) des Mehrkanal-Radarsystems verarbeitet werden, die zu unterschiedlichen Zeitpunkten in einem Empfänger (60) des Mehrkanal-Radarsystems abgetastet werden. Ferner wird eine Korrektur der Zeit- und Phasenreferenzen der empfangenen SAR-Daten durch die Verarbeitung des geschätzten Residual-Taktphasenfehlers ($\delta \hat{f}_{ij}[n_a]$) durchgeführt.

Fig. 2

EP 4 492 091 A1

**Beschreibung**

Die Erfindung betrifft ein Verfahren und eine Vorrichtung zur Schätzung und Korrektur der Zeit- und Phasenreferenzen von nicht-synchronen SAR-Daten, wobei die nicht-synchronen SAR-Daten durch ein bistatisches oder multistatisches Mehrkanal-Radarsystem mit N Kanälen erfasst und bereitgestellt sind.

SAR (Synthetic Aperture Radar)-Systeme ermöglichen die Fernerkundung der Erdoberfläche für die Erfassung von an der Erdoberfläche reflektierten Radarpulsen, welche von dem SAR-System ausgesendet werden, das sich auf einer Plattform mit hoher Geschwindigkeit über der Erdoberfläche bewegt. Bei einem solchen System macht man sich die Erkenntnis zunutze, dass aufgrund der bewegten Plattform die gleichen Bereiche der Erde in unterschiedlichen Positionen erfasst werden, wodurch eine Amplituden-Phaseninformation und schließlich ein Radarbild der Erdoberfläche erhalten werden kann.

Das SAR-System (nachfolgend auch als Satellit oder SAR-Sensor bezeichnet) bewegt sich in einer Richtung, welche als Azimut-Richtung bezeichnet wird. Der Satellit, dessen Höhe über der Erdoberfläche bekannt ist, sendet während seiner Bewegung in Azimut-Richtung kontinuierlich Radarpulse über eine Sendeantenne in Richtung zur Erdoberfläche aus. Von jedem ausgesendeten Radarpuls wird das Radarecho erfasst, indem die an der Erdoberfläche reflektierte Radarstrahlung in der sog. Range-Richtung, welche sich senkrecht zur Flugrichtung (Azimut-Richtung) des Satelliten erstreckt, mit einem Empfänger zeitlich abgetastet wird.

Als Folge erhält man eine Vielzahl von Abtastungen, wobei jede Abtastung dem Radarecho eines bestimmten Radarpulses und einer Range-Position entspricht. Die Zuordnung einer Abtastung zu einem Radarpuls wird durch eine Azimut-Position repräsentiert. Der Sender und der Empfänger sind z.B. Bestandteil einer kombinierten Sende-Empfangsantenne, welche im Sendebetrieb den Sender und im Empfangsbetrieb den Empfänger darstellt. In diesem Fall handelt es sich bei dem SAR-System um ein sog. Einzel-Apertur-System, bei dem die Radarechos nur durch einen einzelnen Empfänger, d.h. nicht gleichzeitig durch mehrere Empfänger, erfasst werden.

Bei der Auswertung werden nur Informationen der Radarstrahlung innerhalb eines von dem ausgesendeten Radarpuls beleuchteten Bodenstreifens (englisch: swath) erfasst, der eine Breite von mehreren Kilometern, z.B. einige zehn oder hundert Kilometer, aufweisen kann. Die Breite des Bodenstreifens ist unter anderem von der Länge des Zeitfensters abhängig, innerhalb dem die rückgestreuten Radarechos von einem ausgesendeten Impuls durch den Empfänger empfangen werden. Dieses Zeitfenster wird als Echofenster bezeichnet. Die empfangenen Echos werden in ihrer Frequenz konvertiert (d.h. gemischt), demoduliert, digitalisiert und in einer zweidimensionalen Matrix als Rohdaten gespeichert.

Das Prinzip der SAR-Messung beruht nunmehr darauf, dass jeweilige Punkte auf der Erdoberfläche mehrfach aus unterschiedlichen Blickwinkeln aufgrund der Bewegung des Satelliten erfasst werden. Aufgrund des bekannten Doppler-Effekts kommt es bei der Erfassung des Radarechos zu einer Phasenmodulation, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus SAR-Daten ist dem Fachmann bekannt und wird deshalb nicht weiter im Detail erläutert. Mit dem SAR-Verfahren wird durch eine Vielzahl von Radarpulsen eines Radarsensors kleiner Aperatur eine größere synthetische Apertur entsprechend der Ausdehnung des Radarpulses auf der Erdoberfläche simuliert.

Im Kontext von SAR wird zwischen punktförmigen Rückstreuern und verteilten Rückstreuern unterschieden. Das Radarecho eines Punkt-Steuers ist dominant innerhalb auf einer Auflösungszelle. Zwei unterschiedliche SAR-Datenerfassungen werden als kohärent betrachtet, wenn die daraus resultierenden SAR-Bilder ein gemeinsames Band des "Szenespektrums" abtasten.

Die SAR-Bildgebung basiert auf der Annahme, dass die Reflektivität eines komplexen kohärenten Rückstreuers rekonstruiert werden kann, wenn seine geometrische Position bekannt ist. Aus diesem Grund müssen zwei Bedingungen erfüllt sein, so dass die Rekonstruktion des Radarsignals genau ist: a) die komplexe Reflektivität des Rückstreuers muss so unverzerrt wie möglich aufgenommen werden, und b) seine geometrische Position muss innerhalb der erfassten Daten ermittelbar sein. Die zweite Bedingung ist dabei nur dann erfüllt, wenn der Sender und der Empfänger eine gemeinsame Zeit- und Phasen-Referenz teilen. Eine gemeinsame Zeit- und Phasen-Referenz ist jedoch nur dann gegeben, wenn der Sender und der Empfänger grundsätzlich eine gleiche Uhren- oder Zeitreferenz verwenden, was bei sog. monostatischen SAR-Systemen der Fall ist. Demgegenüber arbeiten bistatische und multistatische SAR-Systeme üblicherweise mit unterschiedlichen Zeitreferenzen (master clocks) bei Sender und Empfänger.

Der Betrieb eines nicht-synchronen Radarsystems kann auf kooperative oder nichtkooperative Weise erfolgen. Bei einem kooperativen, nicht-synchronen Radarsystem tauschen Sender und Empfänger eine Information über ihre Master-Frequenz aus. In nicht-kooperativen, nicht-synchronen SAR-Systemen arbeiten Sender und Empfänger unabhängig voneinander. Demzufolge findet keine Synchronisation der Zeitreferenz und damit der Referenzfrequenz auf direktem Wege statt.

Die Kalibrierung eines nicht-synchronen SAR-Systems erfordert eine Anpassung der Position des Echofensters sowie eine Korrektur von Phase und Zeit. Die Anpassung der Position des Echofensters ermöglicht eine erfolgreiche Aufnahme von Radardaten. Die Korrektur von Zeit und Phase ermöglicht die Bildung des erwünschten SAR-Bildes. Während die Anforderungen an die Anpassung der Position des Echofensters gering sind (in der Größenordnung einiger 100 ns), erfordert die Kalibrierung von Zeit und Phase eine wesentlich größere Genauigkeit. Hierzu sind kalibrierte Messungen sowohl von Amplitude und Phase erforderlich.

Bei bistatischen und multistatischen Radarsystemen sind Sender und Empfänger auch räumlich voneinander getrennt, wobei dies üblicherweise mit geringeren Entwicklungskosten, verbesserter Leistung, Rekonfigurierbarkeit des SAR-Systems und Skalierbarkeit zusammenhängt (siehe [1]). Wie eingangs beschrieben, werden in solchen SAR-Systemen unterschiedliche Oszillatoren (master clocks) für die Modulation und Demodulation eines Radarträgers verwendet, wobei sich nicht, wie bei monostatischen Systemen, eine niederfrequente Komponente eines Phasenrauschens aufhebt (siehe [2]). Dies beeinträchtigt die Nutzung von bistatischen und multistatischen SAR-Systemen für interferometrische und tomographische Anwendungen (wie in [3] beschrieben ist). Die Phasensynchronisation umfasst Verfahren zur Bestimmung des relativen Phasenverlaufs zwischen den Oszillatoren (master clocks) in Sender und Empfänger.

Ein Beispiel für die Anforderungen an die Synchronisation ist die Erstellung von digitalen Höhenmodellen mit dem bistatischen SAR-System TanDEM-X, die die Kenntnis der relativen Phasen innerhalb weniger Grad erfordert, um systematische Modulationen in den Messungen zu vermeiden ([4]).

Die nachfolgend beschriebenen Phasensynchronisationsstrategien für bistatische und multistatische SAR-Systeme sind wie folgt:

1. Es kann eine bidirektionale Mikrowellenverbindung zum Austausch von Radarpulsen auf der Radarträgerfrequenz zwischen Sender und Empfänger verwendet werden (siehe [4]). Im Fall von TanDEM-X wurden sechs Antennen verwendet, die die gesamte Winkelumgebung der Satelliten abdecken. Eine direkte Mikrowellenverbindung, wie im Fall von TanDEM-X, erfordert die Entwicklung spezieller Hardware, was Kosten und Systemkomplexität erhöht und Auswirkungen auf den Erfassungsmodus haben kann, wie dies z.B. in ([10]) beschrieben ist.

2. Es kann ein datenbasierter Schätzungsalgorithmus, wie z.B. in [5] und [11] beschrieben, zum Einsatz kommen, der in Ermangelung dedizierter Hardware-Lösungen verwendet wird. So wurde dies beispielsweise in der Mission SAOCOM-CS vorgeschlagen (siehe [6]). Die Verwendung eines datenbasierten Schätzungsalgorithmus, wie Auto-Sync, erfordert eine Fokussierung der Daten, und kann empfindlich auf Fokussierungsfehler und andere geometrische Dekorrelationsquellen reagieren und keine absolute Phasensynchronisation durchführen, sondern lediglich eine Phasenabwicklung schätzen.

3. Auf Grundlage der Auswertung von SAR-Rohdaten der Navigationsempfänger in Konfigurationen, in denen sich eine Radarnutzlast und der GNSS-Empfänger denselben Oszillator teilen, kann eine Schätzung durchgeführt werden (siehe [7]). Eine Schätzung, die auf der Auswertung von Rohdaten der Navigationsempfänger basiert, kann bei Systemen mit höheren Trägerfrequenzen, z.B. ab dem X-Band, eine Herausforderung darstellen und für einige GNSS-Empfängerarchitekturen eine unzureichende Genauigkeit liefern.

Alternativ dazu wird in [8] eine vollständige Systemarchitektur (mirrorSAR) angedacht, um die Demodulation der Empfangssignale mit einem anderen Oszillator zu vermeiden. Der Ansatz besteht darin, dass die Empfänger wie Transponder arbeiten, d.h. die Radarechos an ein anderes Element des SAR-Systems, z.B. den Sender, weiterleiten, das Zugang zu dem bei der Modulation verwendeten Oszillator hat. Dieses Vorgehen ist jedoch eher eine Systemarchitekturlösung für begleitende SAR-Missionen denn als spezielle Synchronisationsstrategie zu verstehen.

Es ist Aufgabe der Erfindung, ein verbessertes Verfahren und eine verbesserte Vorrichtung zur Korrektur der Zeit- und Phasenfehler von nicht-synchronen SAR-Daten anzugeben.

Diese Aufgaben werden gelöst durch ein Verfahren gemäß den Merkmalen des Patentanspruches 1 und eine Vorrichtung gemäß den Merkmalen des Patentanspruches 11. Vorteilhafte Ausgestaltungen ergeben sich aus den abhängigen Ansprüchen.

Es wird ein Verfahren zur Korrektur der Zeit- und Phasenreferenzen von nicht-synchronen SAR-Daten vorgeschlagen. Die nicht-synchronen SAR-Daten sind durch ein bistatisches oder ein multistatisches Mehrkanal-Radarsystem mit N Kanälen erfasst und bereitgestellt. Das Mehrkanal-Radarsystem umfasst somit zumindest zwei Kanäle, wobei die Anzahl auch größer sein kann (N ≥ 2). Bei dem Verfahren wird, basierend auf einer, insbesondere ausschließlichen, Auswertung von Informationen der SAR-Daten ein innerhalb der SAR-Daten vorliegender Residual-Taktphasenfehler geschätzt und korrigiert. Erfindungsgemäß ist vorgesehen, dass zur Schätzung des Residual-Taktphasenfehlers differentielle Phasendaten zwischen einem oder mehreren Paaren von Kanälen des Mehrkanal-Radarsystems verarbeitet werden, die zu unterschiedlichen Zeitpunkten in einem Empfänger des Mehrkanal-Radarsystems abgetastet werden. Anschließend wird eine Korrektur der Zeit- und Phasenreferenzen der empfangenen SAR-Daten durch die Verarbeitung des geschätzten Residual-Taktphasenfehlers durchgeführt.

Bei dem vorgeschlagenen Vorgehen handelt es sich um einen datenbasierten Synchronisationsansatz für Mehrkanal-Radarsysteme, der differentielle Phasendaten zwischen den Kanälen verwendet, die zu leicht unterschiedlichen Zeitpunkten abgetastet werden. Es werden die verfügbaren Radardaten genutzt, um das bistatische oder multistatische Radarsystem zu synchronisieren, wobei keinerlei zusätzliche Hardware erforderlich ist.

Handelt es sich bei dem Mehrkanal-Radarsystem um ein Radarsystem mit mehreren Azimut-Phasenzentren, so wird zweckmäßigerweise eine Kombination von differentiellen Phasendaten verschiedener Azimut-Kanäle verarbeitet. So kann die Kombination bistatischer Rohdaten verschiedener Azimut-Kanäle eine Schätzung des momentanen Frequenzfehlers zwischen den Radarträgern von Sender und Empfänger bereitstellen.

In einer zweckmäßigen Ausgestaltung werden zur Schätzung des Residual-Taktphasenfehlers für jedes Paar von Kanälen folgende Informationen verarbeitet: ein Phasenfehler eines Oszillators (master clock des Empfängers) und eine Zeitdifferenz, die der Empfänger des Mehrkanal-Radarsystems für das Zurücklegen einer Strecke, die der Basislinie zwischen dem Paar von Kanälen entspricht, benötigt. Unter dem Begriff der "Basislinie zwischen dem Paar von Kanälen" ist z.B. der Abstand zwischen zwei Azimut-Phasenzentren zu verstehen.

Von Vorteil ist, dass zweckmäßigerweise als SAR-Daten SAR-Rohdaten oder entfernungskomprimierte Daten unmittelbar verarbeitet werden können. So kann insbesondere auf die Verarbeitung von fokussierten Signalen verzichtet werden. Dies vereinfacht die Verarbeitung der SAR-Daten erheblich.

Gemäß einer weiteren zweckmäßigen Ausgestaltung werden zur Schätzung des Residual-Taktphasenfehlers differentielle Phasendaten von bis zu $N \cdot (N-1)/2$ Paaren von Kanälen verarbeitet. Beispielsweise können bei fünf Kanälen bzw. Azimut-Phasenzentren bis zu zehn Paare von Kanälen bzw. Azimut-Phasenzentren verarbeitet werden. Grundsätzlich besteht auch die Möglichkeit, lediglich eine Teilanzahl der maximal möglichen Anzahl von Kanälen zu verarbeiten.

Eine weitere zweckmäßige Ausgestaltung sieht vor, dass eine Schätzung des Residual-Taktphasenfehlers erfolgt gemäß

$$\delta \hat{f}_{ij}[n_a] = \frac{Arg\left[\langle d_i \cdot \Omega_{ij}(d_j^*)\rangle\right]}{2\pi \cdot (\delta t_{a,i} - \delta t_{a,j})},$$

worin $\delta \hat{f}_{ij}$ dem ermittelten Frequenzfehler zwischen den Kanälen entspricht, *Arg* [ . ] ein Operator zur Extraktion einer Phaseninformation einer komplexen Zahl im Argument ist, $\langle . \rangle$ einen Operator zur Mittelung über alle Range-Samples und so viele Samples im Azimut, bis innerhalb der Pulswiederholfrequenz $n_a$ erreicht ist, bezeichnet, $d_i$ und $d_j^*$ SAR-Daten (Rohdaten) der Kanäle sind, und $\delta t_{a,i} - \delta t_{a,j}$ die Verzögerung in langsamer Zeit (in Azimut-Richtung) zwischen den Kanälen *i* und *j* für die Beobachtungsgeometrie ist. Der Operator $\Omega_{ij}$ beschreibt den Ausrichtungsprozess der Daten des Kanals *j* an die native Geometrie des Kanals i, was bei typischen bistatischen Geometrien eine entfernungsabhängige Azimutverschiebung sowie eine leichte Entfernungsverschiebung für die Verarbeitung erfordern kann.

Es ist weiterhin zweckmäßig, wenn als SAR-Daten die SAR-Rohdaten der Kanäle nach einer internen Kalibrierung, welche einen IQ-Abgleich und/oder eine Anomalie und/oder Driftkompensation umfasst, verarbeitet werden. Der IQ-Abgleich zielt darauf ab, ein IQ-Ungleichgewicht zu korrigieren, das auftritt, wenn die Phase zwischen I- und Q-Referenzsignalen nicht perfekt 90 Grad beträgt.

In einer weiteren zweckmäßigen Ausgestaltung wird eine Invertierung des geschätzten Residual-Taktphasenfehlers durchgeführt gemäß:

$$\delta \hat{\phi}[n_a] = (A^T \cdot W \cdot A)^{-1} \cdot A^T \cdot W \cdot \Delta F^T \quad (2)$$

worin A eine Matrix ist, die die lineare Beziehung zwischen Momentanfrequenz und Phase beschreibt, *W* eine diagonale Gewichtsmatrix ist, die die Qualität der verfügbaren Frequenzschätzungen beschreibt und aus einer Identitätsmatrix besteht, falls die Datenqualität über alle Kanäle hinweg einheitlich ist, und ΔF ein Vektor mit allen verfügbaren Frequenzschätzungen $\delta \hat{f}_{ij}$ ist.

Die Azimut-Mittelung wird zweckmäßigerweise so gewählt, dass der größte Teil eines Phasenrauschens in den Oszillatoren (master clocks) erfasst wird, wie dies beispielsweise in der EP 2 843 439 A1 beschrieben ist. Dies führt typischerweise zu einer Abtastung der Momentanfrequenz im Bereich zwischen 1 Hz und 10 Hz, abhängig von den Eigenschaften der Oszillatoren und der Trägerfrequenz des Radar-Systems.

Es ist ferner zweckmäßig, wenn die SAR-Daten der Kanäle vor der Kombination ausgerichtet werden, was bei typischen bistatischen Geometrien eine entfernungsabhängige Azimut-Verschiebung bei der Verarbeitung erfordert. Sobald die Schätzung der Frequenz vorliegt, erfolgt die Inversion des Phasensynchronisationsterms aus der gemeinsamen Mittelwertbildung der Frequenzschätzungen in den verschiedenen Kanalkombinationen und der Integration über die langsame Zeit, gemäß der oben stehenden Gleichung. Diese Gleichung beschreibt einen Ansatz der gewichteten kleinsten mittleren Quadrate (weighted least mean squares, WLMS).

Anders als der in [12] vorgeschlagene AutoSync-Ansatz erfordert das vorgeschlagene Verfahren keine Verwendung eines monostatischen SAR-Bilds als Referenz für die Schätzung der Momentanfrequenz und ist daher weniger empfindlich gegenüber geometrischer Dekorrelation mit zunehmenden Basislinien. Darüber hinaus erfordert das Verfahren keine genaue Fokussierung und ist robuster gegenüber typischen Verarbeitungsfehlern, die durch raumvariable Effekte aufgrund Fehlern bei der Akkommodation von Orbits, Schielen oder der Topographie entstehen. Ähnlich wie bei AutoSync, können die Schätzungen der Phasensynchronisation durch Bewegungen innerhalb einer Szene verfälscht werden, wodurch das Verfahren für Ozeanbeobachtungen weniger in Frage kommt.

Was die Schätzung der Verzerrungen zwischen den Kanälen betrifft, können z.B. Korrelationen zwischen den Kanälen genutzt werden. Eine andere Möglichkeit besteht darin, eine präzise Kalibrierung über Land vorzunehmen, und zwar unter der Annahme, dass das SAR-System bis zur nächsten Erfassung über dem für die Kalibrierung verwendeten Standort stabil bleibt.

Gemäß einer weiteren zweckmäßigen Ausgestaltung werden die nachfolgenden Schritte ein- oder mehrmals iterativ durchgeführt:

a) Korrektur der Zeit- und Phasenreferenzen der empfangenen SAR-Daten durch die Verarbeitung des geschätzten Residual-Taktphasenfehlers zur Korrektur des geschätzten oder in einem vorhergehenden Iterationsschritt ermittelten Taktphasenfehlers, wodurch eine neue Zeitreferenz erhalten wird;
b) Erzeugung eines SAR-Bilds durch die Verarbeitung der neuen Zeitreferenz, wobei eine Rekonstruktion der durch das Radar-System erfassten geometrischen Daten erfolgt;
c) Schätzung des Residual-Taktphasenfehlers des in Schritt b) erzeugten SAR-Bilds.

In Schritt c) wird die Schätzung des Residual-Taktphasenfehlers durch einen Vergleich mit einem Referenz-SAR-Bild, das keinen Taktphasenfehler aufweist, durchgeführt, wobei bezogen auf das Referenz-SAR-Bild eine zweidimensionale Verzerrung des in Schritt b) erzeugten SAR-Bilds ermittelt wird und wobei die Schätzung des Residual-Taktphasenfehlers durch eine Invertierung der ermittelten Verzerrung erfolgt. Dieses Vorgehen ist aus der EP 2 843 439 B1 bekannt, auf dessen Inhalt hiermit verwiesen wird.

In einem zweiten Aspekt wird ein Computerprogrammprodukt vorgeschlagen, das Befehle umfasst, die bei der Ausführung des Programms durch einen Computer diesen veranlassen, das Verfahren gemäß einer oder mehreren Ausgestaltungsvarianten auszuführen.

Gemäß einem dritten Aspekt wird eine Vorrichtung zur Schätzung und Korrektur der Zeit- und Phasenreferenzen von nicht-synchronen SAR-Daten vorgeschlagen, wobei die Vorrichtung eine Recheneinheit umfasst, die dazu eingerichtet ist, basierend auf einer, insbesondere ausschließlichen Auswertung von Informationen der SAR-Daten einen innerhalb der SAR-Daten vorliegenden Residual-Taktphasenfehler zu schätzen und zu korrigieren. Die Recheneinheit ist dazu ausgebildet, zur Schätzung des Residual-Taktphasenfehlers differentielle Phasendaten zwischen einem oder mehreren Paaren von Kanälen des Mehrkanal-Radarsystems zu verarbeiten, die zu unterschiedlichen Zeitpunkten in einem Empfänger des Mehrkanal-Radarsystems abgetastet werden. Es ist ferner dazu ausgebildet, eine Korrektur der Zeit- und Phasenreferenzen der empfangenen SAR-Daten durch die Verarbeitung des geschätzten Residual-Taktphasenfehlers durchzuführen.

Die erfindungsgemäße Vorrichtung weist die gleichen Vorteile auf, wie diese vorstehend in Verbindung mit dem erfindungsgemäßen Verfahren beschrieben wurden.

Die Erfindung wird nachfolgend näher anhand eines Ausführungsbeispiels in der Zeichnung erläutert. Es zeigen:

Fig. 1    ein Blockdiagramm eines bekannten, nicht-synchronen bistatischen SAR-Systems, das SAR-Daten liefert, die nach dem in der Erfindung vorgeschlagenen Verfahren synchronisiert werden könnten;

Fig. 2    ein Blockdiagramm eines prinzipiell bekannten Empfängers des nicht-synchronen bistatischen SAR-Systems, das beispielhaft zwei Empfangskanäle aufweist;

Fig. 3    ein Diagramm, das den Phasensynchronisationsfehler über die Zeit im L-Band visualisiert; und

Fig. 4    den Residual-Taktphasenfehler, der sich bei Verwendung des erfindungsgemäßen Verfahrens ergibt.

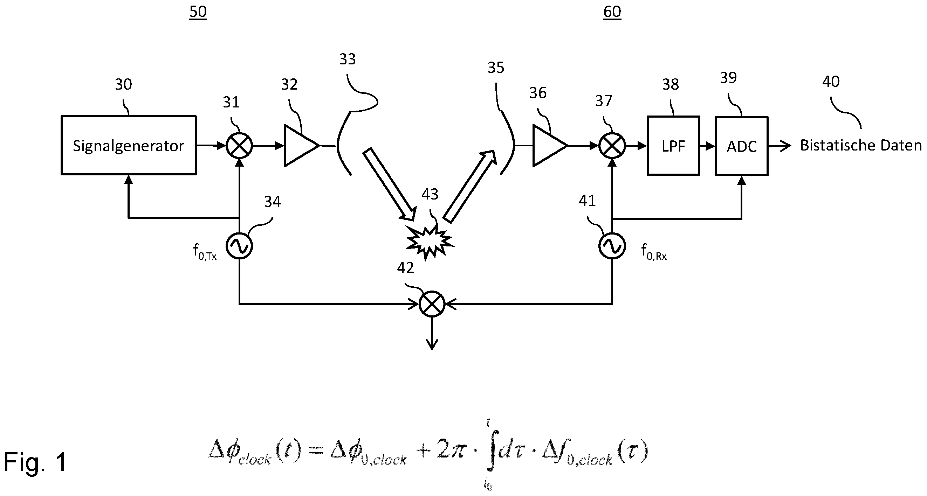

Fig. 1 zeigt ein Blockdiagramm eines bekannten nicht-synchronen SAR-Systems, das einen Sender 50 und einen Empfänger 60 umfasst. Der Sender 50 und der Empfänger 60 sind auf unterschiedlichen Trägerplattformen ausgebildet. Trägerplattformen können Flugzeuge oder Satelliten sein. Der Sender 50 umfasst einen Signalgenerator 30, dem von einer internen Zeitreferenz 34, z.B. einem Oszillator, des Senders 50 eine Referenzfrequenz $f_{0,Tx}$ zugeführt wird.

Die interne Zeitreferenz 34 wird auch als Master-Clock bezeichnet. Die Referenzfrequenz $f_{0,Tx}$ wird ferner einem Mischer 31 zugeführt, der zudem mit einem Ausgang des Signalgenerators 30 verbunden ist. Der Mischer 31 moduliert das von der internen Zeitreferenz 34 zugeführte Taktsignal $f_{0,Tx}$. Das modulierte Signal wird einem Verstärker 32 zugeführt, der mit seinem Ausgang mit einer Sendeantenne 33 verbunden ist. Die Signalantenne 33 sendet Radarimpulse aus, welche von einem Radarziel 43 reflektiert und von einer Antenne 35 des Empfängers 60 empfangen werden.

Die Antenne 35 ist mit einem Verstärker 36 verbunden, der das empfangene Signal einem Mischer 37 zur Demodulation mit einer von einer internen Zeitreferenz 41, z.B. einem Oszillator, bereitgestellten Referenzfrequenz $f_{0,Rx}$ zuführt. Hierzu ist ein weiterer Eingang des Mischers 37 mit der internen Zeitreferenz 41 verbunden. Die interne Zeitreferenz ist mit einem Taktgenerator des Empfängers verbunden. Die interne Zeitreferenz 41 des Empfängers 60 führt die Frequenz $f_{0,Rx}$ neben dem Mischer 37 auch einem Analog-Digital-Wandler 39 (ADC) zu. Ausgangsseitig ist der Mischer 37 mit einem Filter 38 (low-pass filter, LPF) verbunden. Die gefilterten Daten werden dem Eingang des Analog-Digital-Wandlers 39 zugeführt. Am Ausgang des Analog-Digital-Wandlers 39 liegen bistatische SAR-Daten 40 vor.

Um eine Kalibrierung der durch den Empfänger 60 aufgezeichneten SAR-Daten vornehmen zu können, ist es erforderlich, den Frequenzunterschied zwischen den Frequenzen der internen Zeitreferenzen 34, 41 des Senders 50 und des Empfängers 60 zu ermitteln. Schematisch werden diese Frequenzen dem Taktsignalkombinator 42 zugeführt, der eine Differenzphase $\Delta\Phi$ gemäß der in Fig. 1 dargestellten Formel ermittelt.

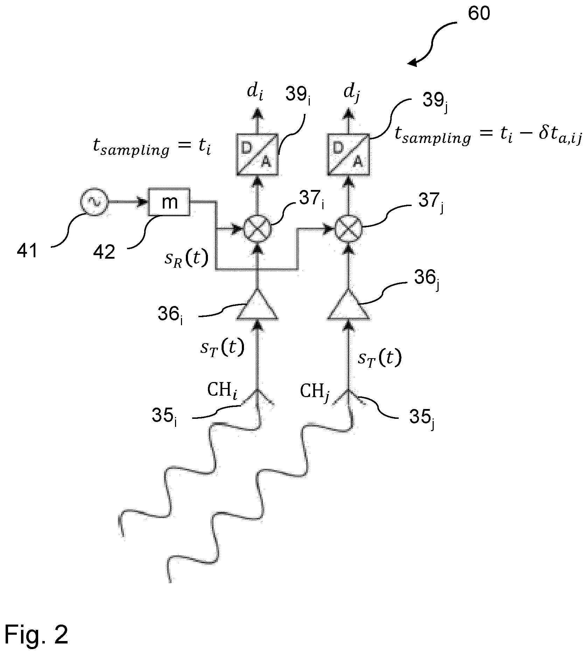

Die vorliegende Erfindung schlägt ein Verfahren vor, welches sich in bistatischen oder multistatischen Mehrkanal-Radarsystemen mit N Kanälen einsetzen lässt. In Fig. 2 ist schematisch der Empfänger 60 mit beispielhaft N = 2 Antennen dargestellt. Die beiden Kanäle sind allgemein mit $CH_i$ und $CH_j$ gekennzeichnet. Die in Verbindung mit Fig. 1 bereits beschriebenen Komponenten sind für den jeweiligen Kanal $CH_i$ bzw. $CH_j$ ebenfalls mit dem zugeordneten Index i oder j gekennzeichnet. Die beiden Kanäle $CH_i$ und $CH_j$ bilden ein Paar von Kanälen des Empfängers des Mehrkanal-Radarsystems, wobei die Anzahl N der Kanäle auch größer sein kann. Abhängig von der Anzahl N der Kanäle kann dann eine Mehrzahl von Paaren von Kanälen in der nachfolgend beschriebenen Weise verarbeitet werden: $N(N-1)/2$.

Über die Darstellung der Fig. 1 hinaus ist in Fig. 2 zwischen der Zeitreferenz 41 und jeweiligen Mischern $37_i$, $37_j$ eine Upscaling-Einheit 42 vorgesehen, um die Frequenz der Zeitreferenz 41 auf die Trägerfrequenz des Radarträgers-signals zu kommen.

In Fig. 2 sind die von den Antennen $35_i$ und $35_j$ empfangenen Radarsignale mit $s_\tau(t)$ gekennzeichnet. Die von der Zeitreferenz 41 und der Upscaling-Einheit 42 erzeugte Referenzfrequenz ist mit $s_R(t)$ gekennzeichnet. Wie in Verbindung mit Fig. 1 beschrieben, werden die an den Antennen $35_i$ und $35_j$ empfangenen Signale $s_\tau(t)$ den jeweiligen Mischern $37_i$ bzw. $37_j$ zugeführt und mit dem von der Zeitreferenz 41 bereitgestellten Referenzfrequenz $s_R(t)$ demoduliert und dem jeweiligen Analog-Digital-Wandler $39_i$ und $39_j$ zugeführt. Am Ausgang der Analog-Digital-Wandler $39_i$ und $39_j$ liegen für einen jeweiligen Kanal $CH_i$ und $CH_j$ die bistatischen SAR-Daten $d_i$ und $d_j$ vor.

Bei den Antennen $35_i$ und $35_j$ bzw. den Kanälen $CH_i$ und $CH_j$ kann es sich um Azimut-Phasenzentren handeln, wobei die Phasenzentren als Abstand eine Länge aufweisen, die einer bekannten Basislänge entspricht.

Die SAR-Daten $d_i$ und $d_j$ stellen SAR-Rohdaten der Kanäle, vorzugsweise nach einer internen Kalibrierung, dar. Die interne Kalibrierung umfasst insbesondere einen IQ-Abgleich und/oder eine Anomalie- und/oder Driftkompensation. Im Weiteren werden als die SAR-Daten die SAR-Rohdaten oder entfernungskomprimierte Daten verarbeitet. Insbesondere ist es nicht erforderlich, fokussierte Signale zu verarbeiten.

Das Verfahren zur Schätzung und Korrektur der Zeit- und Phasenreferenzen der nicht-synchronen SAR-Daten basiert auf einer, insbesondere ausschließlichen Auswertung von Informationen der SAR-Daten, wobei ein innerhalb der SAR-Daten vorliegender Residual-Taktphasenfehler geschätzt und korrigiert wird. Zur Schätzung des Residual-Taktphasenfehlers werden differentielle Phasendaten zwischen dem Paar von Kanälen $CH_i$ und $CH_j$ verarbeitet, welche zu folgenden Zeitpunkten erfasst bzw. abgetastet werden: für den Kanal $CH_i$ ist der Zeitpunkt der Abtastung $t_{sampling} = t_i$, für den Kanal $CH_j$ ist der Zeitpunkt der Abtastung $t_{sampling} = t_i - \delta t_{a,ij}$. Im Folgenden wird eine Korrektur der Zeit- und Phasenreferenzen der empfangenen SAR-Daten durch die Verarbeitung des geschätzten Residual-Taktphasenfehlers durchgeführt. Die Schätzung des Residual-Taktphasenfehlers erfolgt durch eine Invertierung der ermittelten Verzerrung.

Die Kombination der bistatischen SAR-Daten $d_i$ und $d_j$ der Azimut-Kanäle $CH_i$, $CH_j$ ermöglicht die Schätzung des momentanen Frequenzfehlers zwischen den Radarträgern von Sender 50 und empfangenen Empfänger 60 gemäß

$$\delta\hat{f}_{ij}[n_a] = \frac{Arg\left[\langle d_i \cdot \Omega_{ij}(d_j^*)\rangle\right]}{2\pi \cdot (\delta t_{a,i} - \delta t_{a,j})} \qquad (1),$$

bestimmt werden, worin

- sich $i$ und $j$ auf zwei verschiedene Kanäle $CH_i$ und $CH_j$ eines Kanalpaars beziehen,
- $\delta\hat{f}_{ij}$ dem ermittelten Frequenzfehler zwischen den Kanälen $CH_i$ und $CH_j$ entspricht,
- $n_a$ eine zeitliche Diskretisierung über die Pulswiederholfrequenz ist,

- *Arg* [. ] ein Operator zur Extraktion einer Phaseninformation der komplexen Zahl im Argument ist,
- (.) einen Operator zur Mittelung über alle Range-Samples und so viele Samples im Azimut, bis innerhalb der Pulswiederholfrequenz $n_a$ erreicht ist, bezeichnet,
- $d_i$ und $d_j^*$ SAR-Daten des Kanals $CH_i$ bzw. $CH_j$ sind,
- $\delta f_{a,ij}$ die Verzögerung in langsamer Zeit zwischen den Kanälen $CH_i$ und $CH_j$ für die Beobachtungsgeometrie ist, und
- $\Omega_{ij}$ einen Operator, der den Ausrichtungsprozess der Daten des Kanals $j$ an die native Geometrie des Kanals i, beschreibt.

Die Mittelung im Azimut wird derart gewählt, dass der größte Teil der Leistung der Phasenrauschfehler der Zeitreferenz 41 und der Trägerfrequenz des Radarsystems erfasst wird, was bei einer Abtastung der Frequenz im Bereich zwischen 1 Hz und 10 Hz der Fall ist, abhängig von den Eigenschaften des Oszillators der Zeitreferenz 41 und der Trägerfrequenz des Radarsystems.

Die SAR-Daten der Kanäle $CH_i$, $CH_j$ werden vorzugsweise vor der Kombination ausgerichtet, was bei typischen bistatischen Geometrien eine Range-abhängige Verschiebung in Azimut-Richtung für die Verarbeitung erfordert. Ist die Schätzung des ermittelten Frequenzfehlers $\delta \hat{f}_{ij}$ zwischen den Kanälen $CH_i$, $CH_j$ bekannt, erfolgt die Inversion des Phasensynchronisationsterms aus der gemeinsamen Mittelwertbildung der Frequenzfehler in dem Kanalpaar und über die Integration entlang der langsamen Zeit (d.h. in Azimut-Richtung).

Fig. 2 stellt einen Spezialfall dar, in dem der Empfänger 60 lediglich zwei Kanäle aufweist. In diesem Fall wird die Schätzung des Frequenzfehlers nur für das einzige vorliegende Paar von Kanälen durchgeführt. Wie erläutert, kann der Empfänger eine Mehrzahl $N \geq 2$ an Kanälen aufweisen, wodurch sich eine größere Anzahl an möglichen Kanalpaaren ergibt. In diesem Fall wird das oben beschriebene Verfahren für jedes Paar von Kanälen gesondert durchgeführt. Die nachfolgend beschriebene Invertierung, die auf einer Matrix-Schreibweise basiert, berücksichtigt die allgemeine Anzahl N an Kanalpaaren.

Die Inversion erfolgt gemäß:

$$\delta \hat{\phi}[n_a] = (A^T \cdot W \cdot A)^{-1} \cdot A^T \cdot W \cdot \Delta \mathrm{F}^T \quad (2)$$

Diese Gleichung beschreibt einen Ansatz der gewichteten kleinsten mittleren Quadrate (weighted least mean squares, WLMS), bei dem sind:

- A eine Matrix, die die lineare Beziehung zwischen Momentanfrequenz und Phase beschreibt,
- *W* eine diagonale Gewichtsmatrix, die die Qualität der verfügbaren Frequenzschätzungen beschreibt und aus einer Identitätsmatrix besteht, falls die Datenqualität über alle Kanäle hinweg einheitlich ist, und
- $\Delta$F ein Vektor mit allen verfügbaren Frequenzschätzungen $\delta \hat{f}_{ij}$ ist.

Die Elemente der Matrix W können zum Beispiel wie folgt ausgedrückt werden:

$$w_{ij} = \frac{\gamma_{ij}}{\sqrt{1-\gamma_{ij}^2}} \qquad (3)$$

In dieser Gleichung sind $\gamma_{ij}$ Kreuzkorrelationskoeffizienten. Das Signalmodell für die Erfassung des multistatischen SAR-Empfangssystems lautet

$$\mathbf{d}(t_\mathrm{r}, t_\mathrm{a}) = [d_i(t_\mathrm{r}, t_\mathrm{a})]_{i=1,...N} \qquad (4)$$

wobei $(t_r, t_\mathrm{a})$ die schnelle (d. h. Entfernungs-) und die langsame (d. h. Azimut-) Zeit sind, *d* für die Rohdaten steht und *i* sich auf den Kanal bezieht. In der allgemeinsten Beschreibung wird angenommen, dass $d_i$ die Rohdaten unter der Annahme einer perfekten Synchronisation darstellt. Das von einem der Kanäle empfangene Signal kann als eine verzögerte Version einer Referenz beschrieben werden, d. h.,

$$d_i(t_\mathrm{r}, t_\mathrm{a}) = d_\mathrm{ref}(t_\mathrm{r} - \delta t_\mathrm{r}[i], t_\mathrm{a} - \delta t_\mathrm{a}[i]) + n_i(t_\mathrm{r}, t_\mathrm{a}) \qquad (5)$$

wobei der Bezug für kleine Entfernungen bis zu einem gewissen Grad willkürlich ist und z. B. in der Mitte der Empfangsantenne liegen kann (d. h. im mittleren Kanal, wenn N ungerade ist). $\delta t_\mathrm{r}[i]$, $\delta t_\mathrm{a}[i]$ sind Verzögerungen in Entfernung (Range) und Azimut, die von der Position des Kanals in Bezug auf die Referenz abhängen. Insbesondere sind diese Verschiebungen proportional zum Abstand entlang der Bahn zwischen der Referenz und dem Kanal, geteilt durch die Geschwindigkeit des Raumfahrzeugs, d. h.,

$$\delta t_{\mathrm{a}}[i] \approx \eta \cdot \frac{b_i}{v_{\mathrm{sat}}}, \qquad (6)$$

wobei $\eta$ als eine Konstante innerhalb des Strahls mit einem typischen Wert um 0,5 angenommen werden kann. Die Auswirkungen des Synchronisationsfehlers können bestimmt werden gemäß:

$$d_i\big(t_{\mathrm{r}} - \Delta t_{\mathrm{r,clock}}, t_{\mathrm{a}}\big) \cdot \exp\big(\mathrm{j} \cdot \Delta\phi_{\mathrm{clock}}(t_{\mathrm{a}})\big) \quad (7)$$

wobei die Reichweitenverzögerung, die nur vom Synchronisationsphasenfehler abhängt, bestimmt wird gemäß,

$$\Delta t_{\mathrm{r,clock}}(t_{\mathrm{a}}) = \frac{\Delta\phi_{\mathrm{clock}}(t_{\mathrm{a}})}{2\pi \cdot c_0}. \quad (8)$$

Durch den Abgleich und Vergleich der Daten von zwei Kanälen $i,j$ kann die die Änderungsrate von $\Delta\phi_{\mathrm{clock}}(t_{\mathrm{a}})$ bestimmt werden mit:

$$d_i \cdot \Omega_{ij}\big[d_j^*\big] = |d_i|^2 \cdot \exp\big[\mathrm{j} \cdot \big(\Delta\phi_{\mathrm{clock}}(t_{\mathrm{a}}) - \Delta\phi_{\mathrm{clock}}(t_{\mathrm{a}} + \delta t_{\mathrm{a}}[i] - \delta t_{\mathrm{a}}[j])\big)\big] \qquad (9)$$

Dies bedeutet, die Phase der Kombination der Kanäle tastet die Differenz von $\Delta\phi_{\mathrm{clock}}$ für die Verzögerung $\delta t_{\mathrm{a}}[i]$ - $\delta t_{\mathrm{a}}[j]$ = $\tau_{ij}$. ab. Die Inversion von $\Delta\phi_{\mathrm{clock}}$ aus einer Kombination $ij$ folgt aus der diskreten Integration

$$\Delta\phi_{\mathrm{clock},ij} = \sum_{n_{\mathrm{a}}} \Delta\phi_{\mathrm{clock}}(n_{\mathrm{a}}) - \Delta\phi_{\mathrm{clock}}\big(n_{\mathrm{a}} + \delta n_{ij}\big), \qquad (10)$$

wobei die Variablen aus Gründen einer formalen Konsistenz diskretisiert sind. Die Inversion des Fehlers ergibt sich aus der Inversion und Mittelung aller möglichen Kombinationen $N \cdot (N - 1)/2$.

Unter der Annahme, dass die einzelnen Kanäle ähnlich leistungsfähig sind, kann die Genauigkeit bei der Schätzung der Momentanfrequenz wie folgt ausgedrückt werden:

$$\sigma_\phi \approx \frac{\eta(L_a, N)}{\sqrt{2 \cdot M \cdot SNR}} \cdot \sqrt{T_a \cdot f_{clk}} \qquad (11)$$

wobei $\eta$ ein effektiver Mittelungsterm ist, der sich aus der Verwendung aller Kombinationen wie in Gleichung (3) beschrieben ergibt, $L_a$ die Gesamtlänge der Antenne im Azimut ist, M die Anzahl der Rohdaten-Samples ist, die bei der Schätzung der Frequenz gemittelt werden, $T_a$ die Dauer der Erfassung ist und $f_{clk}$ die Bandbreite des Oszillator-Phasenrauschprozesses sind.

Zur Illustration der Leistungsfähigkeit des vorgeschlagenen Verfahrens diente eine Simulation mit der bekannten ROSE-L Systemarchitektur, die in [12] beschrieben ist. Die für die Simulation verwendeten Parameter sind in der nachfolgenden Tabelle aufgeführt:

| Parameter | Wert |
|---|---|
| Antennenlänge | 11 m |
| Anzahl der Azimut-Kanäle | 5 |
| Durchschnittliche Pulswiederholfrequenz PRF | 1.400 Hz |
| Anzahl der Samples in Range-Richtung | 18.000 |
| NE SN | -28 dB |
| Durchschnittliches Signal-Rausch-Verhältnis (SNR) der Gesamtantenne | 5 dB |

(fortgesetzt)

| Parameter | Wert |
|---|---|
| Phasensynchronisations-Schätzungsrate | 1 Hz |

Die durchschnittliche SNR wird dazu verwendet, zufällige Realisierungen eines interferometrischen Phasenfehlers zwischen den Kanälen zu erzeugen, die dann entsprechend den Werten in der Tabelle gemittelt wurden.

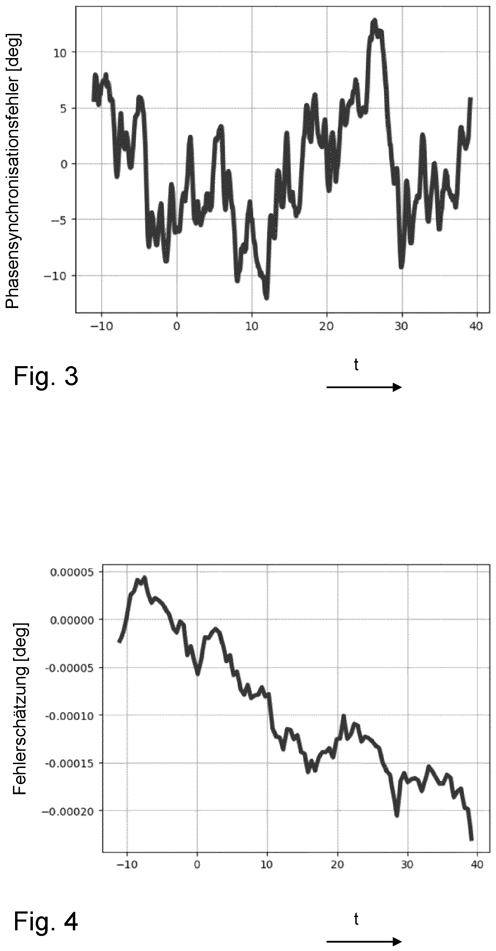

Die Ergebnisse der Simulation sind in den Figuren 3 und 4 dargestellt. Fig. 3 zeigt die Realisierung eines typischen Synchronisationsfehlers, der mit einer auf die ROSE-L-Trägerfrequenz skalierten TanDEM-X-Realisierung erzeugt wurde. Fig. 4 zeigt die Form des Residual-Synchronisationsfehlers für eine einzelne Kombination (d.h. ein einzelnes Paar von Kanälen) unter den Annahmen der Simulation mit einer erkennbaren Random-Walk-Form, die aus dem Frequenzintegrationsschritt resultiert.

Es ist zu berücksichtigen, dass die Ergebnisse nur dem Beitrag des thermischen Rauschens entsprechen und die Auswirkungen anderer systematischer Komponenten wie Kalibrierungsfehler zwischen den Kanälen vernachlässigen, die das endgültige Fehlerbudget beeinflussen. Die Möglichkeit, die Redundanz verschiedener Kanalkombinationen zu nutzen, sowie Kalibrierungsanforderungen für die Signalrekonstruktion zeigen jedoch die Vorteile des vorgeschlagenen Verfahrens.

Darüber hinaus können lineare Phasenterme, die sich aus systematischen Phasenfehlern ergeben, mit einem der oben erwähnten Synchronisationsverfahren kompensiert werden, z.B. mit der oben erwähnten GNSS-basierten Synchronisation oder AutoSync.

Das Verfahren kann in jedem zukünftigen bistatischen oder multistatischen Mehrkanal-Radarsystem verwendet werden, z.B. in zukünftigen Missionen im Rahmen des ESA (Earth Explorers Programs), wie ROSE-L oder SENTINEL-1 NG. Das Verfahren reduziert Kosten, das Risiko und die Komplexität zukünftiger bistatischer und multistatischer Radarsysteme, unabhängig von den Anwendungen, wie z.B. Single-Pass Cross-Track Interferometrie, Tomographie, Wide-Swath Imaging oder hochauflösende Bildgebung.

Referenzen

[1] G. Krieger and A. Moreira, "Spaceborne bi- and multistatic synthetic aperture radar: potential and challenges," IEE Proc. Radar Sonar Navig., vol. 153, no. 3, pp. 184-198, Jun. 2006.

[2] J. L. Auterman, "Phase stability requirements for bistatic SAR," in Proc. IEEE Nat. Radar Conf., Atlanta, USA, Mar., 1984, pp. 48-52.

[3] G. Krieger and M. Younis, "Impact of oscillator noise in bistatic and multistatic SAR," IEEE Geosci. Remote Sens. Lett., vol. 3, no. 3, pp. 424--428, Jul. 2006.

[4] G. Krieger, A. Moreira, H. Fiedler, I. Hajnsek, M. Werner, M. Younis, and M. Zink, "TanDEM-X: a satellite formation for high-resolution SAR interferometry," IEEE Trans. Geosci. Remote Sens., vol. 45, no. 11, pp. 3317-3341, Nov. 2007.

[5] M. Rodriguez-Cassola, P. Prats, D. Schulze, N. Taus-Ramon, U. Stein-brecher, L. Marotti, M. Nanninni, M. Younis, M. Zink, A. Reigber, P. Lopez-Dekker, G. Krieger, and A. Moreira, "First bistatic spaceborne SAR experiments with TanDEM-X," IEEE Geosci. Remote Sens. Lett., vol. 7, no. 1, pp. 108-112, Jan. 2012.

[6] K. Scipal et al., "The SAOCOM-CS mission: ESA's first bi static and tomographic I-band mission," in Proceedings IGARSS, 2017.

[7] E. Rodrigues Silva Filho et al., "Experimental evaluation of GNSS-based frequency synchronization for SAR applications," in Proceedings IGARSS, 2022.

[8] G. Krieger, M. Zonno, J. Mittermayer, A. Moreira, S. Huber, and M. Rodriguez-Cassola, "Mirrorsar: A fractionated space transponder concept for the implementation of low-cost multistatic sar missions," in EUSAR 2018; 12th European Conference on Synthetic Aperture Radar. Aachen, Germany: VDE, Jun. 2018, pp. 1-6.

[10] M. Pinheiro et al., "Reconstruction of coherent pairs of synthetic aperture radar data acquired in interrupted mode," in TGRS, 2015.

[11] M. Rodriguez-Cassola, "Bi static synthetic aperture radar data processing," DLR Technical Report 2013/27, Oberpfaffenhofen, Germany, 2012.

[12] M. Davidson et al., "ROSE-L: Copemicus L-band SAR Mission," in Proceedings IGARSS, 2021.

**Patentansprüche**

1. Verfahren zur Schätzung und Korrektur der Zeit- und Phasenreferenzen von nicht-synchronen SAR-Daten ($d_i$, $d_j$), wobei die nicht-synchronen SAR-Date ($d_i$, $d_j$)n durch ein bistatisches oder ein multistatisches Mehrkanal-Radarsystem mit N Kanälen erfasst und bereitgestellt sind, bei dem

   basierend auf einer, insbesondere ausschließlichen, Auswertung von Informationen der SAR-Daten ($d_i$, $d_j$) ein innerhalb der SAR-Daten ($d_i$, $d_j$) vorliegender Residual-Taktphasenfehler ($\delta\hat{f}_{ij}[n_a]$) geschätzt und korrigiert wird, **dadurch gekennzeichnet, dass**

   zur Schätzung des Residual-Taktphasenfehlers ($\delta\hat{f}_{ij}[n_a]$) differentielle Phasendaten zwischen einem oder mehreren Paaren von Kanälen ($CH_i$, $CH_j$) des Mehrkanal-Radarsystems verarbeitet werden, die zu unterschiedlichen Zeitpunkten in einem Empfänger (60) des Mehrkanal-Radarsystems abgetastet werden, und eine Korrektur der Zeit- und Phasenreferenzen der empfangenen SAR-Daten durch die Verarbeitung des geschätzten Residual-Taktphasenfehlers ($\delta\hat{f}_{ij}[n_a]$) durchgeführt wird.

2. Verfahren nach Anspruch 1, **dadurch gekennzeichnet, dass** bei einem Mehrkanal-Radarsystem mit mehreren Azimut-Phasenzentren eine Kombination von differentiellen Phasendaten verschiedener Azimut-Kanäle verarbeitet wird.

3. Verfahren nach Anspruch 1 oder 2, **dadurch gekennzeichnet, dass** zur Schätzung des Residual-Taktphasenfehlers für jedes Paar von Kanälen ($CH_i$, $CH_j$) folgende Informationen verarbeitet werden:

   ein Phasenfehler eines Oszillators des Empfängers (60) und eine Zeitdifferenz, die der Empfänger (60) des Mehrkanal-Radarsystems für das Zurücklegen einer Strecke, die der Basislinie zwischen dem Paar von Kanälen ($CH_i$, $CH_j$) entspricht, benötigt.

4. Verfahren nach einem der vorhergehenden Ansprüche, **dadurch gekennzeichnet, dass** die SAR-Daten ($d_i$, $d_j$) SAR-Rohdaten oder entfernungskomprimierte Daten sind.

5. Verfahren nach einem der vorhergehenden Ansprüche, **dadurch gekennzeichnet, dass** zur Schätzung des Residual-Taktphasenfehlers ($\delta\hat{f}_{ij}[n_a]$) differentielle Phasendaten von bis zu $N \cdot (N - 1)/2$ Paaren von Kanälen ($CH_i$, $CH_j$) verarbeitet werden.

6. Verfahren nach einem der vorhergehenden Ansprüche, **dadurch gekennzeichnet, dass** eine Schätzung des Residual-Taktphasenfehlers ($\delta\hat{f}_{ij}[n_a]$) erfolgt gemäß

$$\delta\hat{f}_{ij}[n_a] = \frac{Arg\left[\langle d_i \cdot \Omega_{ij}(d_j^*)\rangle\right]}{2\pi \cdot (\delta t_{a,i} - \delta t_{a,j})},$$

   worin:

   - sich i und j auf zwei verschiedene Kanäle ($CH_i$, $CH_j$) eines Kanalpaars beziehen,
   - $\delta\hat{f}_{ij}$ dem ermittelten Frequenzfehler zwischen den Kanälen ($CH_i$, $CH_j$) entspricht,
   - $n_a$ eine zeitliche Diskretisierung über die Pulswiederholfrequenz ist,
   - $Arg$ [. ] ein Operator zur Extraktion einer Phaseninformation der komplexen Zahl im Argument ist,
   - (.) einen Operator zur Mittelung über alle Range-Samples und so viele Samples im Azimut, bis innerhalb der Pulswiederholfrequenz $n_a$ erreicht ist, bezeichnet,

   - $d_i$ und $d_j^*$ SAR-Daten des Kanals $CH_i$ bzw. $CH_j$ sind, und
   - $\delta f_{a,ij}$ die Verzögerung in langsamer Zeit zwischen den Kanälen ($CH_i$, $CH_j$) für die Beobachtungsgeometrie ist, und
   - $\Omega_{ij}$ einen Operator, der den Ausrichtungsprozess der Daten des Kanals $j$ an die native Geometrie des Kanals i, beschreibt.

7. Verfahren nach Anspruch 6, **dadurch gekennzeichnet, dass** als SAR-Daten ($d_i$, $d_j$) die SAR-Rohdaten der Kanäle ($CH_i$, $CH_j$) nach einer internen Kalibrierung, welche einen IQ-Abgleich und/oder eine Anomalie- und/oder Driftkompensation umfasst, verarbeitet werden.

8. Verfahren nach einem der vorhergehenden Ansprüche, **dadurch gekennzeichnet, dass** eine Invertierung des geschätzten Residual-Taktphasenfehlers ($\delta\hat{t}_{ij}[n_a]$) durchgeführt wird gemäß:

$$\delta\hat{\phi}[n_a] = (A^T \cdot W \cdot A)^{-1} \cdot A^T \cdot W \cdot \Delta F^T$$

worin sind

- A eine Matrix, die die lineare Beziehung zwischen Momentanfrequenz und Phase beschreibt,
- *W* eine diagonale Gewichtsmatrix, die die Qualität der verfügbaren Frequenzschätzungen beschreibt und aus einer Identitätsmatrix besteht, falls die Datenqualität über alle Kanäle hinweg einheitlich ist, und
- $\Delta F$ ein Vektor mit allen verfügbaren Frequenzschätzungen $\delta\hat{t}_{ij}$ ist.

9. Verfahren nach einem der vorhergehenden Ansprüche, **dadurch gekennzeichnet, dass** die nachfolgenden Schritte ein- oder mehrmals iterativ durchgeführt werden:

a) Korrektur der Zeit- und Phasenreferenzen der empfangenen SAR-Daten ($d_i$, $d_j$) durch die Verarbeitung des geschätzten Residual-Taktphasenfehlers ($\delta\hat{t}_{ij}[n_a]$) zur Korrektur des geschätzten oder in einem vorhergehenden Iterationsschritt ermittelten Taktphasenfehlers, wodurch eine neue Zeitreferenz erhalten wird;
b) Erzeugung eines SAR-Bilds durch die Verarbeitung der neuen Zeitreferenz, wobei eine Rekonstruktion der durch das Radar-System erfassten geometrischen Daten erfolgt;
c) Schätzung des Residual-Taktphasenfehlers ($\delta\hat{t}_{ij}[n_a]$) des in Schritt b) erzeugten SAR-Bilds.

10. Computerprogrammprodukt, umfassend Befehle, die bei der Ausführung des Programms durch einen Computer diesen veranlassen, das Verfahren nach einem der Ansprüche 1 bis 9 auszuführen.

11. Vorrichtung zur Schätzung und Korrektur der Zeit- und Phasenreferenzen von nicht-synchronen SAR-Daten ($d_i$, $d_j$), wobei die nicht-synchronen SAR-Daten ($d_i$, $d_j$) durch ein bistatisches oder ein multistatisches Mehrkanal-Radarsystem mit N Kanälen erfasst und bereitgestellt sind, mit einer Recheneinheit, die dazu eingerichtet ist, basierend auf einer, insbesondere ausschließlichen, Auswertung von Informationen der SAR-Daten ($d_i$, $d_j$) einen innerhalb der SAR-Daten ($d_i$, $d_j$) vorliegenden Residual-Taktphasenfehler ($\delta\hat{t}_{ij}[n_a]$) zu schätzen und korrigieren,
**dadurch gekennzeichnet, dass**

zur Schätzung des Residual-Taktphasenfehlers ($\delta\hat{t}_{ij}[n_a]$) differentielle Phasendaten zwischen einem oder mehreren Paaren von Kanälen ($CH_i$, $CH_j$) des Mehrkanal-Radarsystems verarbeitet werden, die zu unterschiedlichen Zeitpunkten in einem Empfänger des Mehrkanal-Radarsystems abgetastet werden, und
eine Korrektur der Zeit- und Phasenreferenzen der empfangenen SAR-Daten durch die Verarbeitung des geschätzten Residual-Taktphasenfehlers ($\delta\hat{t}_{ij}[n_a]$) durchgeführt wird.

12. Vorrichtung nach Anspruch 11, **dadurch gekennzeichnet, dass** diese dazu eingerichtet ist, die Schritte des Verfahrens gemäß einem der Ansprüche 2 bis 9 auszuführen.

EP 4 492 091 A1

Fig. 1

$$\Delta\phi_{clock}(t) = \Delta\phi_{0,clock} + 2\pi \cdot \int_{t_0}^{t} d\tau \cdot \Delta f_{0,clock}(\tau)$$

$t_{sampling} = t_i$

$d_i$  $39_i$  $d_j$  $39_j$  $t_{sampling} = t_i - \delta t_{a,ij}$

$37_i$  $37_j$

$s_R(t)$

$36_j$

$36_i$

$s_T(t)$  $s_T(t)$

$CH_i$  $CH_j$

$35_i$  $35_j$

41  42

60

Fig. 2

Fig. 3

Fig. 4

Europäisches Patentamt
European Patent Office
Office européen des brevets

# EUROPÄISCHER RECHERCHENBERICHT

**Nummer der Anmeldung**

EP 24 18 6465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RODRIGUEZ-CASSOLA MARC ET AL: "Autonomous time and phase calibration of spaceborne bistatic SAR systems", 10TH EUROPEAN CONFERENCE ON SYNTHETIC APERTURE RADAR, 5. Juni 2014 (2014-06-05), Seiten 264-267, XP093226831, | 1,3-12 | INV. G01S13/90 G01S7/40 |
| A | * das ganze Dokument * ----- | 2 | |
| A | AZCUETA MARIO ET AL: "Potential for Absolute Ionosphere and Clock Correction in Noncooperative Bistatic SAR", IEEE TRANSACTIONS ON GEOSCIENCE AND REMOTE SENSING, IEEE, USA, Bd. 58, Nr. 1, 1. Januar 2020 (2020-01-01) , Seiten 363-377, XP011763118, ISSN: 0196-2892, DOI: 10.1109/TGRS.2019.2936569 [gefunden am 2019-12-26] * das ganze Dokument * ----- | 1-12 | |
| A | RODRIGUEZ-CASSOLA M ET AL: "Bistatic TerraSAR-X/F-SAR Spaceborne-Airborne SAR Experiment: Description, Data Processing, and Results", IEEE TRANSACTIONS ON GEOSCIENCE AND REMOTE SENSING, IEEE, USA, Bd. 48, Nr. 2, 1. Februar 2010 (2010-02-01), Seiten 781-794, XP011296763, ISSN: 0196-2892 * sek. IV.B * ----- -/-- | 1-12 | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 22. November 2024 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

**Nummer der Anmeldung**

EP 24 18 6465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LOPEZ-DEKKER P ET AL: "Phase Synchronization and Doppler Centroid Estimation in Fixed Receiver Bistatic SAR Systems", IEEE TRANSACTIONS ON GEOSCIENCE AND REMOTE SENSING, IEEE, USA, Bd. 46, Nr. 11, 1. November 2008 (2008-11-01), Seiten 3459-3471, XP011238779, ISSN: 0196-2892, DOI: 10.1109/TGRS.2008.923322 * das ganze Dokument * | 1-12 | |
| A | RODRIGUEZ-CASSOLA MARC ET AL: "General Processing Approach for Bistatic SAR Systems: Descrip tion and Performance Analysis", ELECTRONIC PROCEEDINGS / EUSAR 2010 : 8TH EUROPEAN CONFERENCE ON SYNTHETIC APERTURE RADAR ; 7 - 10 JUNE 2010, AACHEN, GERMANY, 10. Juni 2010 (2010-06-10), Seiten 998-1001, XP093227029, Berlin [u.a.] ISBN: 978-3-8007-3272-2 * das ganze Dokument * | 1-12 | **RECHERCHIERTE SACHGEBIETE (IPC)** |
| A,D | EP 2 843 439 A1 (DEUTSCHES ZENTRUM FUER LUFT & RAUMFAHRT EV [DE]) 4. März 2015 (2015-03-04) * das ganze Dokument * | 1-12 | |

Der vorliegende Recherchenbericht wurde für alle Patentansprüche erstellt

| Recherchenort | Abschlußdatum der Recherche | Prüfer |
|---|---|---|
| München | 22. November 2024 | Rudolf, Hans |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .......................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 6465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2024

| Im Recherchenbericht angeführtes Patentdokument | Datum der Veröffentlichung | Mitglied(er) der Patentfamilie | Datum der Veröffentlichung |
|---|---|---|---|
| EP 2843439 A1 | 04-03-2015 | DE 102013214676 A1 | 29-01-2015 |
| | | EP 2843439 A1 | 04-03-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2843439 A1

- EP 2843439 B1

**In der Beschreibung aufgeführte Nicht-Patentliteratur**

- **G. KRIEGER** ; **A. MOREIRA**. Spaceborne bi- and multistatic synthetic aperture radar: potential and challenges. *IEE Proc. Radar Sonar Navig.*, June 2006, vol. 153 (3), 184-198
- **J. L. AUTERMAN**. Phase stability requirements for bistatic SAR. *Proc. IEEE Nat. Radar Conf., Atlanta, USA*, March 1984, 48-52
- **G. KRIEGER** ; **M. YOUNIS**. Impact of oscillator noise in bistatic and multistatic SAR. *IEEE Geosci. Remote Sens. Lett.*, July 2006, vol. 3 (3), 424-428
- **G. KRIEGER** ; **A. MOREIRA** ; **H. FIEDLER** ; **I. HAJNSEK** ; **M. WERNER** ; **M. YOUNIS** ; **M. ZINK**. TanDEM-X: a satellite formation for high-resolution SAR interferometry. *IEEE Trans. Geosci. Remote Sens.*, November 2007, vol. 45 (11), 3317-3341
- **M. RODRIGUEZ-CASSOLA** ; **P. PRATS** ; **D. SCHUL-ZE** ; **N. TAUS-RAMON** ; **U. STEIN-BRECHER** ; **L. MAROTTI** ; **M. NANNINNI** ; **M. YOUNIS** ; **M. ZINK** ; **A. REIGBER**. First bistatic spaceborne SAR experiments with TanDEM-X. *IEEE Geosci. Remote Sens. Lett.*, January 2012, vol. 7 (1), 108-112

- **K. SCIPAL et al.** The SAOCOM-CS mission: ESA's first bi static and tomographic I-band mission. *Proceedings IGARSS*, 2017
- **E. RODRIGUES SILVA FILHO et al.** Experimental evaluation of GNSS-based frequency synchronization for SAR applications. *Proceedings IGARSS*, 2022
- **G. KRIEGER** ; **M. ZONNO** ; **J. MITTERMAYER** ; **A. MOREIRA** ; **S. HUBER** ; **M. RODRIGUEZ-CASSO-LA**. Mirrorsar: A fractionated space transponder concept for the implementation of low-cost multistatic sar missions. *EUSAR 2018; 12th European Conference on Synthetic Aperture Radar. Aachen, Germany: VDE*, June 2018, 1-6
- **M. PINHEIRO et al.** Reconstruction of coherent pairs of synthetic aperture radar data acquired in interrupted mode. *TGRS*, 2015
- **M. RODRIGUEZ-CASSOLA**. Bi static synthetic aperture radar data processing. *DLR Technical Report 2013/27, Oberpfaffenhofen, Germany*, 2012
- **M. DAVIDSON et al.** ROSE-L: Copemicus L-band SAR Mission. *Proceedings IGARSS*, 2021